# EUROPEAN PATENT APPLICATION

(11) **EP 1 868 080 A1**
(43) Date of publication of application: **19.12.2007**
(21) Application number: 07252269.1
(22) Date of filing: 06.06.2007
(51) Int. Cl.: G06F 9/00, G06F 3/00

(54) **Content converting device, content display device, content browsing device, content converting method, content browsing method, computer program and computer readable storage medium**

(30) Priority: 07.06.2006 JP 2006158572
(71) Applicant: Ricoh Company, Ltd., Tokyo 143-8555 (JP); National Institute of Information and Communications Technology, Koganei-shi, Tokyo 184-8795 (JP)
(72) Inventor: Araki, Tadashi, Tokyo 143-8555 (JP); Miyamori, Hisashi, c/o Nat Inst of Info and Com Technology, Tokyo 184-8795 (JP); Minakuchi, Mitsuru, c/oNat.Inst. of Info and Communications Techn., Tokyo 184-8795 (JP); Ma, Qiang, c/oNat.Inst. of Info and Communications Techn., Koganei-shi, Tokyo 184-8795 (JP); Tanaka, Katsumi, c/o Nat.Inst. of Info and Communications Techn., Tokyo 184-8795 (JP)
(74) Representative: Leeming, John Gerard

(57) **Abstract**

A content converting device includes a structure description parser (51a), a zooming description parser (51b), a converting unit (52a), and a generating unit (52b). The structure description parser (51a) parses a structure description related to a display format of content including objects to be zoomed. The zooming description parser (51b) parses a zooming description that describes zooming operation/behavior for each of the objects. The converting unit (52a) converts the structure description to a content file based on a parsing result obtained by the structure description parser 51a. The generating unit (52b) generates script language codes based on a parsing result obtained by the zooming description parser 51b.

## Description

The present document incorporates by reference the entire contents of Japanese priority document, 2006-158572 filed in Japan on June 7, 2006.

The present invention relates to a content converting device, a content display device, a content browsing device, a content converting method, a content browsing method, and a computer program product.

Nowadays, with widespread use of mobile phones with camera, digital video cameras or the like, improvement in performance of personal computers, and increase in network speed, it has become common to capture multimedia information, such as audio, and a still image and a moving image except for text, in a personal computer (PC) to utilize, transmit and receive, and share the multimedia information on a Web environment. The amount of such multimedia information is increasing on the Web environment. To utilize a vast amount of multimedia information on networks effectively, it is important that a user can browse information (content) according to his/her utilization purpose efficiently. Preferably, the user can control an amount of information to be displayed or the type of media to be utilized according to browsing state or his/her preference.

Web browsing requires easy access to desired information. Therefore, it is important that a relationship between an outline of the entire content and details of the content is easily understandable. For example, if content of individual items can be simultaneously browsed in a screen of a list of search results, improvement in search efficiency can be expected.

It is also required that information is displayed flexibly in a form suitable for user's purpose, preference, and browsing state. For example, in the case of browsing a report about business trip, a boss of a reporter is likely to wish to view an agenda for a meeting on the business trip, and an accountant is likely to wish to view utilized transportations and transportation expenses. It is also likely that detailed text information with images is desired on a desktop PC, while an outline of the information is desired on a mobile terminal. Therefore, it is desirable that a user can control an amount of text, a size of an image, balance between the both, or the like flexibly.

On the other hand, fundamental operation interfaces in a current Web environment include scrolling and anchor clicking. By utilizing these operations properly, a user can perform browsing while displaying large (broad area) content on a screen, or while moving from one page to another among hyperlinked related pages by anchor clicking. Thus, browsing efficiency is enhanced.

However, viewability is reduced with an increase in amount of information to be displayed on a single page even if scrolling is utilized. When one page is divided into pieces and they are linked, a user jumps to another page to browse a linked page, and therefore, context of browsing is lost. A number of jumps between links do not only makes it difficult to return to an original page but also makes it difficult to find positioning of a portion on which attention is currently focused in the entire context.

As described above, it is difficult to control a display form flexibly according to user's purpose, preference, and browsing state in the current Web environment. It is necessary to preliminarily assume display forms and prepare a plurality of pages corresponding to the display forms to realize such flexible control in the general Web environment, which results in complicated page structure.

In recent years, a zooming user interface (ZUI) that is an operation interface for controlling the level of detail of what is displayed on a screen continuously has been researched and developed variously.

There has been proposed a conventional technology, in which, when one of respective pages or images arranged two-dimensionally is selected and zoomed, only the page or image is displayed largely while a peripheral display remains unchanged. Reference may be had to, for example, Perlin, K. and Fox, D.: Pad: "An alternative approach to the computer interference," Proceedings of SIGGRAPH' 93, pp. 57-64 (1993), Bederson, B. B. and Hollan, J. D.: Pad++: "A Zooming Graphical Interface for Exploring Alternate Interface Physics," Proceedings of UIST'94, pp. 17-26 (1994), and Bederson, B. B., Meyer, J. and Good, L.: Jazz: "An Extensible Zoomable User Interface Graphics Toolkit in Java," Proceedings of UIST'00, pp. 171-180 (2000).

There has been proposed another conventional technology, in which candidates of display formats for an object to be handled are presented on a menu and the object is zoomed automatically in such an extent that it can be displayed with a proper level of detail by a display format selected by a user. Reference may be had to, for example, Holmquista, L. E. and Ahlbergb, C.: Flip Zooming: "A Practical Focus+Context Approach to Visualizing Large Data Sets," Proc. HCI International'97, pp. 763-766 (1997), and Woodruff, A., Landay, J. and Stonebraker, M.: "Goal-Directed Zoom," Proceedings of CHI'98, pp. 305-306 (1998).

Besides, there has been proposed still another conventional technology related to zooming from a plurality of viewpoints. Reference may be had to, for example, Sarkar, M., Snibbe, S. S., Tversky, O. J., and Reiss, S. P., M.: Stretching the Rubber Sheet: "A Metaphor for Viewing Large Layouts on Small Screens," Proceedings of UIST'93, pp. 81-91 (1993).

There has been proposed still another conventional technology related to zooming in response to a moving speed of a mouse cursor. Reference may be had to, for example, Igarashi, T and Hinckley, K.: "Speed-dependent Automatic Zooming for Efficient Document Navigation," WISS 2000, pages (2000).

According to these technologies, an overview and enlarged detail can be displayed together in one page, which contributes to improvement in browsing efficiency.

However, these technologies have been fundamentally developed based upon intention to provide an application for displaying content with a zooming function. For example, for realizing such a configuration that, when upper text in meaning is zoomed in, lower detailed text appears, or display balance between text and an image associated with each other is controlled in a linking manner, a behavior program including information about the structure of content to be subjected to zooming operation has to be incorporated into an application in advance. Therefore, it is generally impossible to zoom any content except for content having a structure that is assumed for the application. Accordingly, these technologies are improper for performing the zooming operation versatilely on a Web environment where there are contents having various structures.

It is an object of the present invention to at least partially solve the problems in the conventional technology.

According to an aspect of the present invention, a content converting device includes a structure description parser that parses a structure description related to a display format of content including objects to be zoomed, a zooming description parser that parses a zooming description that describes zooming operation and behavior for each of the objects, a converting unit that converts the structure description to a content file based on a parsing result obtained by the structure description parser, and a generating unit that generates script language codes based on a parsing result obtained by the zooming description parser.

According to another object of the present invention, a content display device that generates content based on a structure description related to a display format of content including objects to be zoomed and a zooming description describing zooming operation and behavior for each of the objects to display the content, includes a structure description parser that parses the structure description, a zooming description parser that parses the zooming description, a converting unit that converts the structure description to a content file based on a parsing result obtained by the structure description parser, a generating unit that generates script language codes based on a parsing result obtained by the zooming description parser, and an output unit that outputs the content file and the script language codes.

According to still another object of the present invention, a content browsing device includes a receiving unit that receives input of a structure description related to a display format of content including objects to be zoomed and a zooming description that describes zooming operation and behavior for each of the objects, a structure description parser that parses the structure description, a zooming description parser that parses the zooming description, a converting unit that converts the structure description to a content file based on a parsing result obtained by the structure description parser, a generating unit that generates script language codes based on a parsing result obtained by the zooming description parser, an output unit that outputs the content file and the script language codes, and a display controlling unit that interprets the content file and the script language codes to display the content, and changes a display state of the content in response to a command from a user.

According to still another object of the present invention, a content converting method includes first parsing a structure description related to a display format of content including objects to be zoomed, second parsing a zooming description that describes zooming operation and behavior for each of the objects, converting the structure description to a content file based on a parsing result obtained at the first parsing, and generating script language codes based on a parsing result obtained at the second parsing.

According to still another aspect of the present invention, a computer program product includes a computer program that implements the above methods on a computer.

The above and other objects, features, advantages and technical and industrial significance of this invention will be better understood by reading the following detailed description of presently preferred embodiments of the invention, when considered in connection with the accompanying non-limiting drawings.
Fig. 1 is a schematic diagram of a content browsing system according to a first embodiment of the present invention;
Fig. 2 is a block diagram of a hardware configuration of a personal computer shown in Fig. 1;
Fig. 3 is a functional block diagram of a server and a client shown in Fig. 1;
Fig. 4 is an example of a Web document model;
Fig. 5 is a schematic diagram for explaining a process of combining a zooming description language (ZDL) and a hypertext markup language (HTML);
Fig. 6 is an example of HTML display (page1.html);
Fig. 7 is an example of HTML display (link1.html);
Figs. 8 to 11 are examples of screen display for explaining zooming behavior based on a ZDL description in a first example;
Figs. 12 to 16 are examples of screen display for explaining zooming behavior based on a ZDL description in a second example;
Fig. 17 is an example of HTML display (page2.html);
Fig. 18 is an example of HTML display (link100.html);
Figs. 19 to 21 are examples of screen display for explaining zooming behavior based on a ZDL description in a third example;
Figs. 22 to 24 are examples of screen display for explaining zooming behavior based on a ZDL description in a fourth example;
Fig. 25 is a schematic diagram for explaining a process of combining ZDL and HTML according to a second embodiment of the present invention; and
Fig. 26 is a schematic diagram for explaining a process of combining ZDL and HTML according to a third embodiment of the present invention.

Exemplary embodiments of the present invention are explained in detail below with reference to the accompanying drawings.

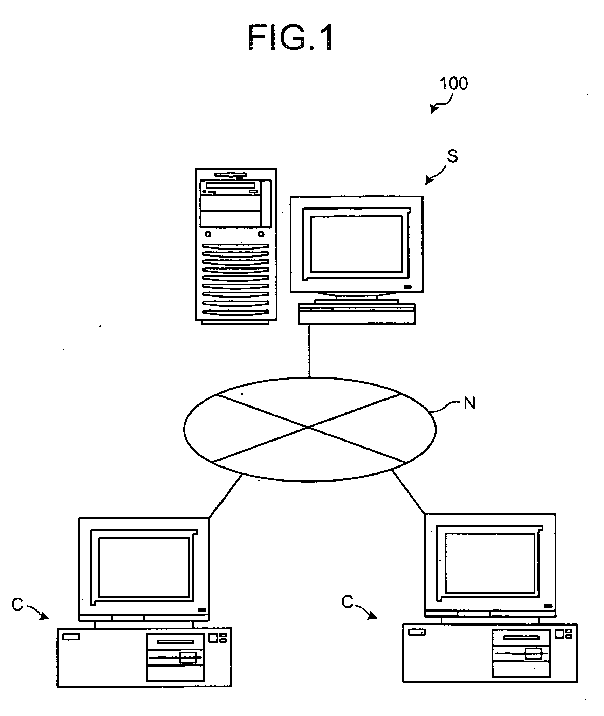

A first embodiment of the present invention is explained with reference to Figs. 1 to 24. Fig. 1 is a schematic diagram of a content browsing system 100 according to the first embodiment. The content browsing system 100 is a server-client system that includes a server (content server) S, and a plurality of clients C connected to the server S via a network N such as a Local Area Network (LAN). The server S is a computer for providing services to the clients C. The clients C are computers that users operate to receive the services. The server S and the client C are general personal computers.

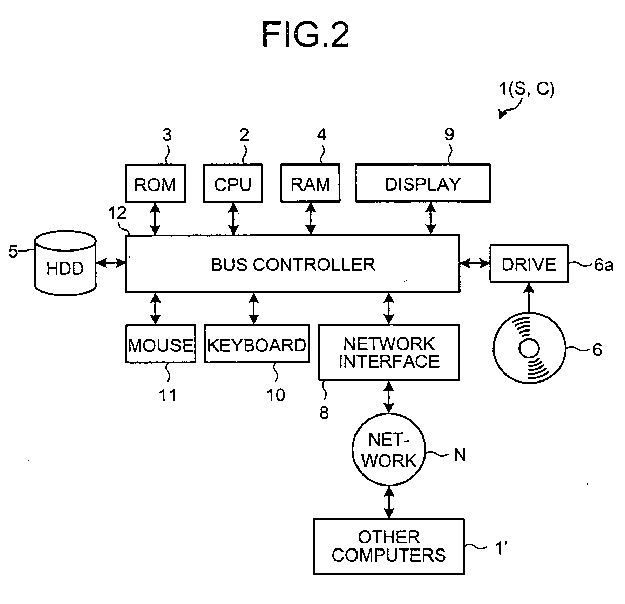

Fig. 2 is a block diagram of a hardware configuration of a personal computer 1. The personal computer (hereinafter, "computer") 1 includes a Central Processing Unit (CPU) 2, a Read Only Memory (ROM) 3, a Random Access Memory (RAM) 4, a Hard Disk Drive (HDD) 5, a drive 6a, a network interface 8, a display 9, a keyboard 10, a mouse 11, and a bus controller 12.

The CPU 2 performs data processing. The ROM 3 stores therein a basic input/output system (BIOS) and the like. The RAM 4 is a primary storage device that temporarily stores information during processing. The HDD 5 is a secondary storage device that stores therein an application program, a processing result, and the like. The drive 6a for a removable medium 6 that is a storage medium for externally storing, distributing, or acquiring information (an application program and the like). The network interface 8 is connected to a network N for communicating with external other computers 1'. The display 9 displays a processing progress, a processing result, and the like for a user. The keyboard 10 and the mouse 11 each are an input unit through which a user provides input such as a command and information to the computer 1. The bus controller 12 controls data communication among these units.

Examples of the removable medium 6 include a magnetic storage medium such as a flexible disk, a hard disk and a magnetic tape, a magneto-optical storage medium such as a magneto optical disk (MO), an optical storage medium such as a compact disc (CD), a compact disc-read only memory (CD-ROM), a compact disc-recordable (CD-R), a compact disc-read only memory (CD-RW), a digital video disc-read only memory (DVD-ROM), a digital video disc-recordable (DVD-R), a digital video disc-random access memory (DVD-RAM), a digital video disc-rewritable (DVD-RW) and DVD+RW, and a semiconductor memory.

In data communication, upon receiving data to be transmitted, the network interface 8 outputs a signal to the network N. Upon receiving a signal of data via the network N, the network interface 8 determines whether the data is necessary, and discards unnecessary data. That is, transmission and reception of any data are performed via the network interface 8.

Generally, when a user turns on the computer 1, the CPU 2 starts a program called "loader" in the BIOS in the ROM 3. The CPU 2 also loads a program called "operating system (OS)" for managing hardware and software of the computer 1 from the HDD 5 into the RAM 4. When the OS starts, it supports start of the application program, reading of information, storing thereof, and the like according to user's operation. Examples of known OS include Windows (registered trademark of Microsoft Corporation), and UNIX (registered trademark of X/Open, Inc.). Programs running on the OS are herein referred to as "application program". The application program is not limited to one operating on such a predetermined OS. The application program can be one causing OS to perform part of various processes described later, or can be included as a portion of a group of program files configuring predetermined application software, an OS, or the like.

Generally, an application program installed in the HDD 5 of the computer 1 is recorded on the removable medium 6, and the application program recorded on the removable medium 6 is installed on the HDD 5. Therefore, the removable medium 6 can also be a recording medium for storing the application program. The application program can be downloaded from the outside via the network interface 8 into the HDD 5.

In the computer 1 (the server S and the client C), when the application program running on the OS starts, the CPU 2 performs various operations to control the respective units.

Next, characteristic processing of the operations performed by the CPU 2 is explained. Briefly speaking, the first embodiment is characterized in that, when zoom-in is performed on an initial screen showing only text in multimedia content (reports, proceedings, notes, or the like), more detailed text information, such as photographs of conference participants, moving images of discussion, and sound of the discussion, can be browsed.

The server S (the computer 1) stores a content display program in the HDD 5 as an application program. That is, the sever S functions as a content display apparatus, and when the content display program running on the OS starts, the CPU 2 controls the respective units to perform content display processing according to the content display program.

On the other hand, the client C (the computer 1) stores a content browsing program in the HDD 5 as an application program. That is, the client C functions as a content browsing device, and when the content browsing program running on the OS starts, the CPU 2 controls the respective units to perform content browsing processing according to the content browsing program.

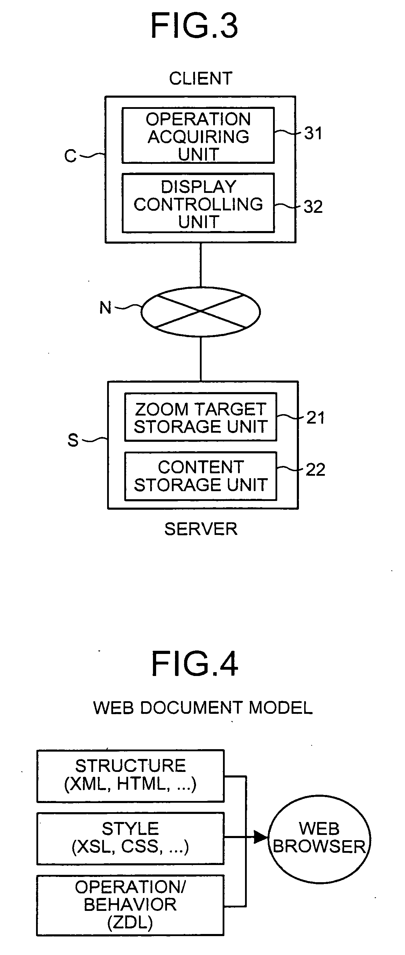

Fig. 3 is a functional block diagram of the server S and the client C for explaining the content display processing and the content browsing processing. As shown in Fig 3, the server S includes a zoom target storage unit 21 and a content storage unit 22, which are implemented by executing the content display program on the OS. The client C includes an operation acquiring unit 31 and a display controlling unit 32, which are implemented by executing the content browsing program on the OS.

First, the content display processing performed by the server S is explained.

The zoom target storage unit 21 stores media objects (text, still image, moving image, audio, and the like) in, for example, the HDD 5. The media objects constitute a multimedia content that represents the content of information, and each can be a zoom target. That is, the media objects are units of zooming operation.

The content storage unit 22 stores a display description (a structure description and a zooming description) for the multimedia content. The display description is stored, for example, in the HDD 5. The zooming description is described in a zooming description language (ZDL) based on an extensible markup language (XML). The display description has the following features (a to f) :
a. The description language can describe zooming operation/behavior of a zoom target independently of a structure of content.
b. The description language can describe zooming operation/behavior for each of the media objects that constitute content.
c. The description language can differentiate a media object to be zoomed from other part of content.
d. The description language can describe change in the level of detail of a media object and media transition.
e. The description language can describe propagation of zooming operation between media objects associated with each other.
f. The description language allows template-like description.

A fundamental structure of the description language for realizing these requirements is explained below.

### 1. Zooming operation for a zoom target

The "zoom target" is a unit of an object to be zoomed, and includes text, still image, moving image, and audio media objects that constitute content. A <template/> tag represents a template of a zoom target. A "name" attribute and a "match" attribute represent a name of a template and a reference position of a media object in a content structure description, respectively. The media object is represented by <text/>, <video/>, or the like. A "select" attribute designates a relative position from the reference position designated by the "match" attribute to each media object. A user designates a desired zoom target to conduct zooming operation, for example, by placing a mouse cursor on a zoom target; however, a specific designating method is not referred to in the description language.

### 2. Control of the level of zoom based on a zoom factor

The "zoom factor" is a value representing the level of zooming of each zoom target. The zoom factor takes a value from 0.0 to 1.0 continuously. The Zoom factor is designated by a "ZoomFactor" attribute. A display state of each media object corresponding to the zoom factor is described by a <dispText> tag, a <dippImg> tag, a (dispVideo> tag, or a <dispAudio> tag (details are described later). Thereby, the change in the level of detail of a media object or the media transition can be described (see example described later). An "initZoomFactor" attribute in a <template/> tag is an initial zoom factor when content is first displayed. The zoom factor is determined by operation performed by a user for a zoom target, for example, based on a moving distance of the mouse cursor associated with the zoom factor; however, a specific operating method is not referred to in the description language.

### 3. Zoom propagation between zoom targets associated with each other

The "zoom propagation" means that when a zoom target is zoomed, other related objects are also zoomed in conjunction with the zoom target (for example, when a zoom target in an upper layer is zoomed, related objects in a lower layer are simultaneously zoomed). In the zoom propagation, the zoom factor of a propagation destination zoom target is calculated from the zoom factor of a propagation source zoom target based on a predetermined "Zoom propagation factor", and a display state of the propagation destination zoom target is controlled. The zoom propagation factor is a ratio between a change rate of the zoom factor in the zoom source and that in the zoom destination (for example, when the zoom propagation factor is 0.8 and the zoom factor of the propagation source changes by 0.5, the zoom factor of the propagation destination is changed by 0.4). The behavior is described by a <propagation/> tag. A "destination" attribute and a "select" attribute represent a template name of the propagation destination zoom target and a position of a media object included in the propagation destination zoom target in the structure description, respectively. A "relation" attribute represents a ratio between the change rate of the zoom factor of the zoom target in the propagation source and that in the propagation destination. For example, when the zoom propagation factor is 0.8 and the zoom factor of the propagation source changes by 0.5, the zoom factor of the propagation destination is changed by 0.4. When the zoom propagation factor is -0.5 and the zoom factor of the propagation source changes by 0.6, the zoom factor of the propagation destination is changed by - 0.3.

### 4. Association between structure description and zooming operation/behavior description using Xpath

All attribute values of the "match" attribute in the <template/> tag, the "select" attribute in the <text/> and <video/> tags, the "select" attribute in the <propagation/> tag describe corresponding portions in the structure description by XPath. The XPath (XML Path Language) defines a syntax indicating a specific portion of an XML document.

### 5. Display state of a media object

Text, a still image, a moving image, and audio are represented by <dispText>, <dispImg>, <dispVideo>, and <dispAudio> tags, respectively. The zoom factor is designated by the "zoomFactor" attribute.
- Example of text
   <dispText zoomFactor="0.5" fontSize="10pt"/>
   Meaning: text is displayed with a font size of 10 point at a zoom factor of 0.5.
- Example of still image
   <dispImg zoomFactor="0.2" imagSize="10%"/>
   Meaning: a still image is displayed in 10% of the maximum size at a zoom factor of 0.2.
- Example of moving image
   <dispVideo zoomFactor="0.7" start="0" end ="300"
   VideoSize="50%"/>
   Meaning: a moving image from 0th frame to 300th frame is displayed in 50% of the maximum size at a zoom factor of 0.7.
- Example of audio
   <dispAudio zoomFactor="0.4" start="0s" end= "30s"/>
   Meaning: audio of 30 seconds from the beginning is reproduced at a zoom factor of 0.4

According to the zooming description, zoom propagation between zoom targets can be described, and, when one media object (text, still image, moving image, audio, or the like) is zoomed, other media objects are zoomed together with the media object. Thus, natural zooming from one zoom target to others can be performed..

Browsing operation or behavior of content in Web environment and intention of a content creator are considered below. Regarding scroll operation, opportunity or necessity for reflecting any intention of a content creator is low and a user performs scrolling mainly depending on the size of a viewer. On the other hand, regarding the anchor click, the content creator describes an object to be clicked (an anchor represented by a character string or an image) and a uniform resource locator (URL) of a link destination with his/her clear intention. It is not especially necessary to describe dynamic behavior.

Next, the zooming operation is considered. Regarding the zooming operation, to simply zoom in/zoom out the entire content, there is no specific item required to be designated by the content creator. However, for realizing fine zooming operation, the content creator is required to describe intentionally a target to be zoomed, the level of detail according to zooming operation, and how to change displayed media. Thus, zooming operation/behavior has to be described on the content side.

That is, if the content creator provides a description of zooming operation/behavior reflecting the structure of content on the content side, unlike the conventional ZUI, the zooming operation can be versatilely applied to various contents in Web environment, which allows a user to finely select a zoom target and control display state.

The first embodiment proposes a new Web document model in which operation/behavior description is added to the conventional structure description and style description of content. As an example, ZDL is used for the operation/behavior description, and continuous browsing operation is associated thereto. Thereby, as shown in Fig. 4, it becomes possible to describe structure, style, and operation/behavior independently by a combination of XML+XSL+ZDL.

With such a Web document model, zooming operation can be performed on content including existing content, and applicability to a versatile Web environment can be improved. By replacing ZDL as required, display is realized which meets a browsing situation and preference of a user.

Next, the content browsing processing in the client C is explained.

The operation acquiring unit 31 acquires operation content of a user. The operation acquiring unit 31 acquires such operation as dragging of a mouse cursor for zooming operation after an object to be zoomed is designated. When, for example, the mouse cursor is dragged downward on a display screen, the object is to be zoomed in, while the mouse cursor is dragged upward, the object is to be zoomed out.

The display controlling unit 32 reads a media object (text, still image, moving image, audio, or the like) to be zoomed stored in the HDD 5 or the like by the zoom target storage unit 21 based on the operation content of the user acquired from the operation acquiring unit 31 and the display description (the structure description and the zooming description) stored in the HDD 5 or the like by the content storage unit 22 to control setting of display/non-display or the level of detail of a media object on the display 9, automatic setting of a media object display position, display of a frame line surrounding a media object, or the like. Specifically, the display controlling unit 32 interprets the display description (the zooming description) stored by the content storage unit 22 to perform the zooming display, thereby setting the display/non-display or the level of detail of a media object to be displayed on the display 9.

As the operation acquiring unit 31 and the display controlling unit 32, a Web browser can be used.

Next, display of content on the display 9 utilizing a display description (the structure description and the zooming description) as described above is explained. In the following case, ZDL for a description of operation/behavior is combined with a hypertext markup language (HTML) for a description of structure.

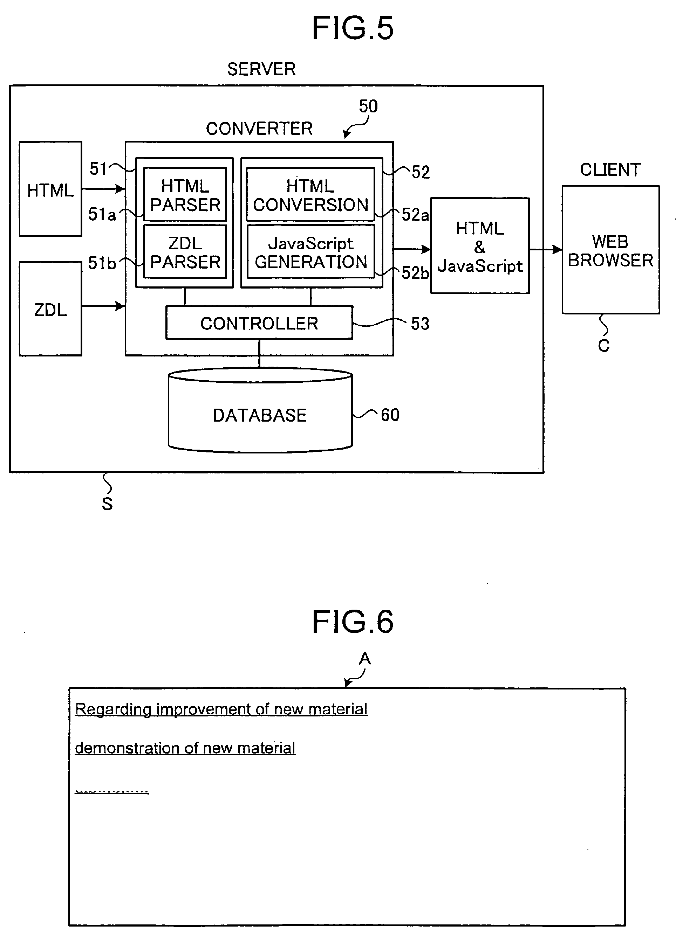

Concretely, for example, as shown in Fig. 5, a converter 50 that is a content converting device provided on the server S side reads HTML describing the structure and ZDL describing the operation/behavior, and converts them to a set of an HTML file and JavaScript (registered trademark) codes. Thus, a user on the client C side can perform browsing and zooming operation through a versatile Web browser (the operation acquiring unit 31 and the display controlling unit 32). The JavaScript (registered trademark) codes are a set of codes that realize zooming operation/behavior described using ZDL.

The converter 50 is described in detail below. As shown in Fig. 5, the converter 50 includes a parser 51 that parses HTML and ZDL, a code converting and generating unit 52 that converts HTML codes and generates JavaScript (registered trademark) (script language) codes, and a controller 53 that controls the parser 51 and the code converting and generating unit 52. The parser 51 includes an HTML parser 51a that is a structure description parser and parses HTML, and a ZDL parser 51b that is a zooming description parser and parses ZDL. The code converting and generating unit 52 includes an HTML converting unit 52a that performs HTML code conversion and a JavaScript (registered trademark) generating unit 52b that generates JavaScript (registered trademark) codes.

The controller 53 is connected to a database 60 that stores therein predefined rules pertaining to HTML code conversion and JavaScript (registered trademark) code generation. The database 60 is formed in the HDD 5 or the like.

The database 60 stores therein predefined rules such as "designated <a/> tag of input HTML is converted to <t:video/> tag in response to <dispVideo/> tag of input ZDL" and "onload="Initialize ()" is added to <BODY/> tag of input HTML". A portion of the JavaScript (registered trademark) whose versatility is high and which is commonly usable is also stored in the database 60 beforehand and is included in output JavaScript (registered trademark) according to description of ZDL.

In the converter 50, the parser 51 parses HTML and ZDL, and the code converting and generating unit 52 performs HTML conversion and JavaScript (registered trademark) code generation by referring to the database 60. An HTML file as a content file and JavaScript (registered trademark) codes that have been converted and generated in the converter 50 are output to the client C by an output unit (not shown).

Upon receiving the HTML file and the JavaScript (registered trademark) codes that have been converted and generated in the converter 50 from the sever S, the client C analyzes the HTML file and the JavaScript (registered trademark) codes, and displays them by the Web browser (the display controlling unit). The display state is changed according to zooming operation provided by a user for the content.

The Web browser (the display controlling unit) on the client C side is required to be compatible with Dynamic HTML and HTML+TIME¥cite in addition to an ordinary HTML to move content or designate timing for image reproduction interactively. These functions have already been installed on a versatile Web browser. When a user opens a page of output HTML with JavaScript (registered trademark), an Initialize function called by the onload event dynamically allocates codes of JavaScript (registered trademark) to objects corresponding to respective HTML tags, which enables zooming operation.

### First Example

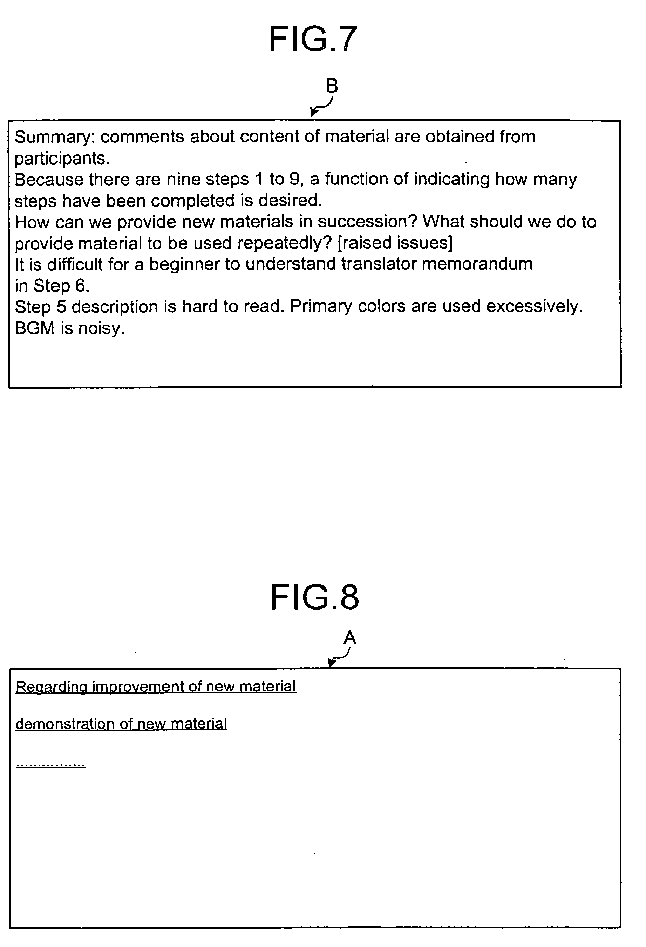

An example is explained in which zooming operation is propagated from a link source to a link destination, and text of a link destination page is embedded in a link source page to be zoom-displayed. Two types of HTMLs (page1.html and link1.html) describing a structure shown below are displayed as shown in Figs. 6 and 7. Fig. 7 depicts content B of a link destination of anchor text "Regarding improvement of new material" in content A of a link source shown in Fig. 6.

### [Structure description of content]

```
[page1.html]
 <html xmlns="http://www.w3.org/1999/xhtml" xml:lang="ja"
 lang="ja">
 <head>
     <title> examination on content of new material</tile>
     </head>
     <body>
 (dl)
     <dt>
 <a href= "http://linkl.html/"> Regarding improvement of new
 material</a>
 </dt>
     <dt>
 <a href= "http://link2.html/"> demonstration of new
 material</a>
 </dt>
 .....
 .....
 </dl>
 </body>
 </html>
 [link1.html]
 <html xmlns="http://www.w3.org/1999/xhtml" xml:lang="ja"
 lang="ja">
 <head>
     <title> Regarding improvement of new material</tile>
 </head>
 <body>
     <p> summary: comments about content of material are
 obtained from participants </p>
     <p> Because there are nine steps 1 to 9, a function of
 indicating how many steps have been completed is desired
 </p>
     <p> How can we provide new materials in succession?
 What should we do to provide material to be used
 repeatedly? [raised issues] </p>
     <p> It is difficult for a beginner to understand
 translator memorandum in Step 6 </p>
     <p> Step 5 description is hard to read. Primary
 colors are used excessively. </p>
     <p> BGM is noisy </p>
 </body>
 </html>
     ZDL describing the following operation/behavior is
 applied to HTML describing such a structure as above.
     [Zooming description of content]
 <template name= "Overview" match="/html/body/dl"
 initZoomFactor="0.0">
     <propagation destination="Item" select="dt"
 relation="1.0"/>
 </template>
 <template name="Item" match="/html/body/dl/dt"
 initZoomFactor="0.0">
     <text select="a">
           <dispText zoomFactor="0.0" fontSize="6pt"/>
           <dispText zoomFactor="1.0" fontSize="12pt"/>
     </text>
     <propagation destination="ItemPage" select="a"
 relation="1.0"/>
 </template>
 <template name="ItemPage" match="/html"
 initZoomFactor="0.0">
     <text select="body/p[1]">
          <dispText zoomFactor="0.0" fontSize="6pt"/>
          <dispText zoomFactor="1.0" fontSize="12pt"/>
     </text>
     <text select="body/p[position ()>1]">
          <dispText zoomFactor="0.3" fontSize="6pt"/>
          <dispText zoomFactor="1.0" fontSize="12pt"/>
     </text>
 </template>
```

According to the ZDL description, there are two kinds of zoom targets ("Overview" and "Item") in the content A of the link source; the former corresponds to overall zooming and the latter corresponds to zooming of individual items. The former zooming operation is propagated to the latter (<propagation destination="Item" ····· />. The latter zooming operation is further propagated to content ("ItemPage") of the link destination designated by <a href= ···· /> (<propagation destination="ItemPage" select="a"). In this case, the value of the "select" attribute of the <propagation/> tag is "a", and the latter zooming operation is propagated to the content B of the link destination designated by the "href" attribute in a <a/> tag of a corresponding HTML file.

The zooming operation/behavior of the content B of the link destination is described by <template name="ItemPage" ····· />. Incidentally, it is assumed that all the structure descriptions (link1. html, link2. html, link3. html,·····) of the content B of the link destination have the same structure, and they are different only in content of text. Therefore, one template for the zooming operation/behavior description can be commonly applied to the structure descriptions. Only the first row (p[1]) of text is displayed in 6 points when the zoom factor of the "ItemPage" is 0.0, while the other rows (p[position ()>1]) do not appear until the zoom factor becomes 0.3.

Transition of zooming behavior based on these descriptions is shown in Figs. 8 to 11.

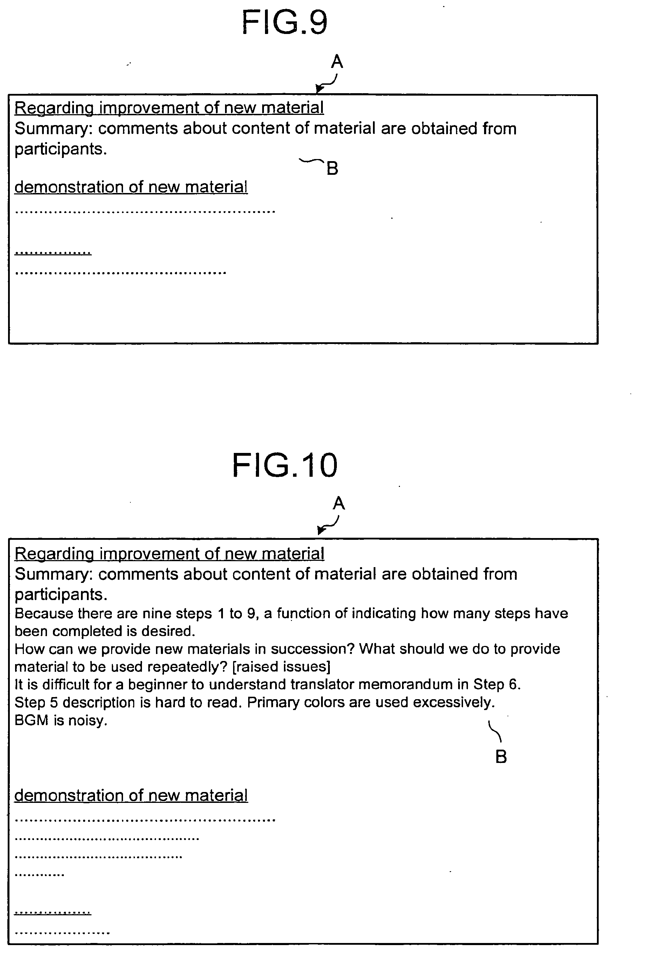

An initial zoom factor is 0.0 in all of "Overview", "Item", and "ItemPage", and, in an initial state of display, only anchor text of [page1.htm1] is displayed in 6 points (see Fig. 8). At this point, even with a slight zoom-in operation, the first row of the content B of the link destination appears in 6 points on the same screen. That is, if "Overview" is zoomed in, the first rows of all the link destinations (link1.html, link2.html, link3.htm1,·····) appear (see Fig. 9). Although not shown, if only "Item" corresponding to text "Regarding improvement of new material" is zoomed, only the first row of link1.html appears.

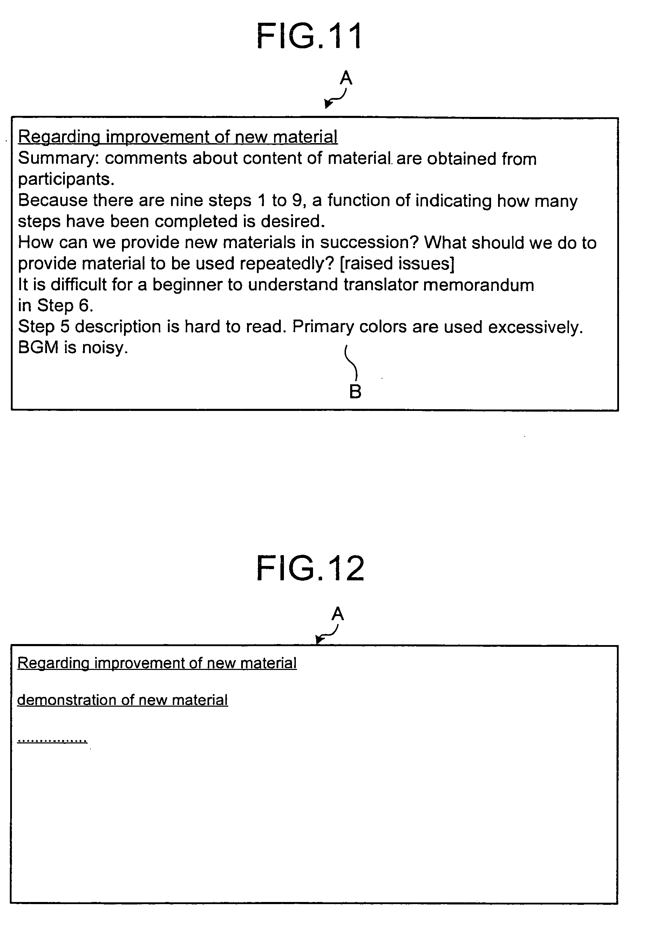

When "Overview" is further zoomed in from the state shown in Fig. 9, because a zoom propagation factor between "Overview" and "item" and that between "Item" and "Itempage" are both 1.0 (relation="1.0"), zoom factors thereof change at the same change rate. When all the zoom factors of "Overview", "Item", and "ItemPage" become 0.3, the second row and rows subsequent thereto of the content B of the link destination appear in 6 points. At this time, sizes of the anchor text of [page1.html] and the first row of the content B are enlarged (see Fig. 10). When all the zoom factors reach 1.0 according to further zooming-in from the state shown in Fig. 10, all texts of the link source and the link destination are displayed in 12 points (see Fig. 11).

As just described, regarding the contents A and B where a plurality of pages are linked, information (object) of the content B of the link destination can be embedded in the content A of the link source, and zoom-displayed. Thus, the contents A and B can be browsed on the same screen without losing the browsing context, and versatile zooming operation can be implemented.

### Second Example

Next, another example is explained in which a zoom factor of the content A of the link source propagates to a page of the content B of the link destination within a defined range. The HTML file is basically similar to that explained in the first example except that a portion of ZDL changes as follows:

```
 <template name="Item" match="/html/body/dl/dt"
 initZoomFactor="0.0">
      <text select="a">
           <dispText zoomFactor="0.0" fontSize="6pt"/>
           <dispText zoomFactor="1.0" fontSize="12pt"/>
      </text>
     <propagation destination="ImagePage" select="a"
 relation="1.0" 1_factor="0.4"/>
 </template>
```

That is, a new attribute description, 1_factor="0.4", is added to the <propagation/> tag of the zoom target "Item". This means that, when the zoom factor of "Item" is equal to or more than 0.4 (a predetermined lower limit value or more), the zoom propagation to "ImagePage" occurs.

Transition of zooming behavior based on these descriptions is shown in Figs. 12 to 16.

According to the ZDL description, only the anchor text of [page1.html] is displayed in 6 points in an initial state as in the case of Fig. 8 (see Fig. 12). When "Overview" is zoomed in from this state, because a zoom propagation factor between "Overview" and "Item" and that between "Item" and "ImagePage" are both 1.0 (relation="1.0"), zoom factors thereof change at the same change rate.

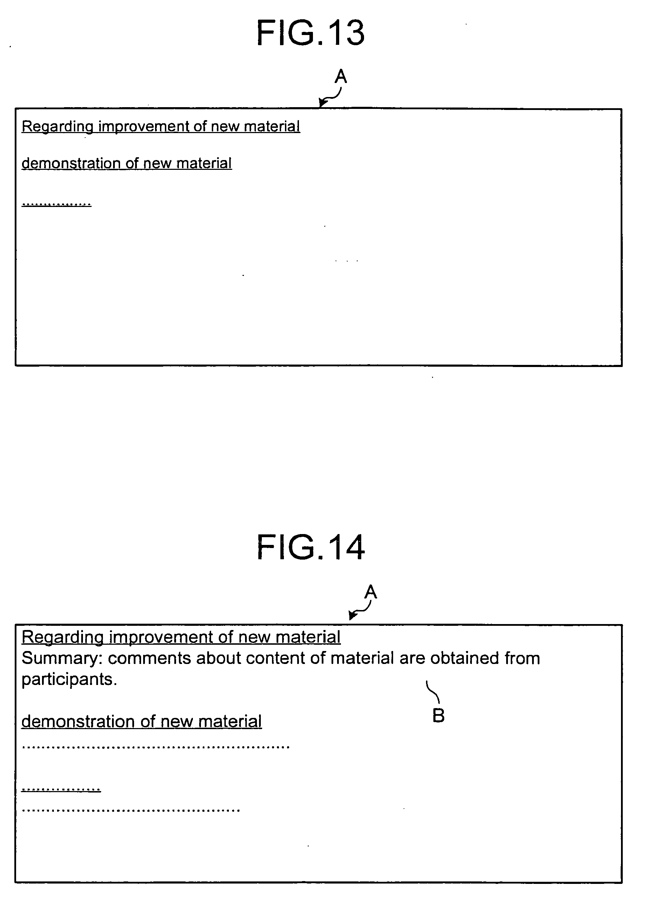

When "Overview" is zoomed in, the first row of the content B of the link destination immediately appears in the first example. On the other hand, in the second example, the first row does not appear until the zoom factors of "Overview" and "Item" reach 0.4 (see Fig. 13). When the zoom factors of "Overview" and "Item" reach 0.4, the zoom propagation to "ItemPage" starts, and the first row of the content B of the link destination appears in 6 points (see Fig. 14). At this point, the zoom factor of "Imagepage" is 0.0.

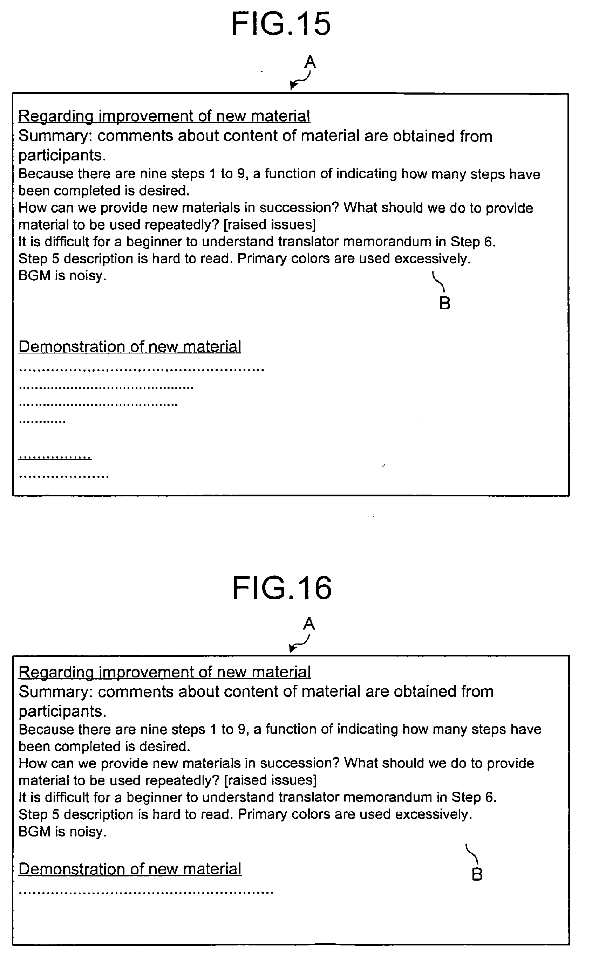

Next, when the zoom factor of "Imagepage" reaches 0.3 according to further zooming-in from the state shown in Fig. 14, the second row of the content B of the link destination and rows subsequent thereto also appear (see Fig. 15). A state where the zoom factors of "Overview" and "Item" have reached 1.0 according to further zooming-in is shown in Fig. 16. At this time, the zoom factor of "ItemPage" is 0.6.

Although not shown, if the zoom propagation to "ItemPage" is desired when the zoom factor of "Item" is a predetermined upper limit value or less (for example, equal to or less than 0.7), an attribute description such as h_factor="0.7" can be added to the <propagation/> tag.

As described above, the zoom propagation occurs only when the zoom factor of the propagation source is within a predefined range. Thus, a content creator can set the zoom propagation to occur or not to occur, which enables further flexible control.

### Third Example

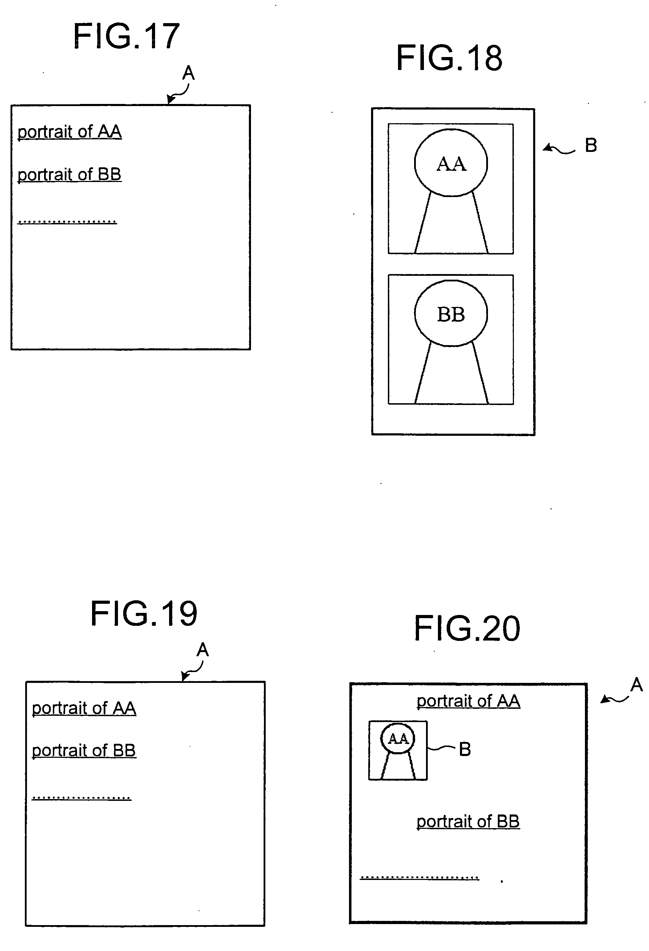

Next, another example is explained in which zooming operation is propagated from the content A of the link source to a specific portion of the content B of the link destination, and a still image of a page of the content B is embedded in a link source page to be zoom-displayed. Two types of HTML files (page2.html and link100.html) describing a structure shown below are displayed as shown in Figs. 17 and 18, respectively. Note that "portrait of AA" and "portrait of BB" in Fig. 17 are associated with AA.gif and BB.gif in Fig. 18, respectively.

### [Structure description of content]

```
 [page2.html]
 <html xm1ns="http://www.w3.org/1999/xhtml" xml:lang="ja"
 lang="ja">
     <head>
          <title> list of members </title>
     </head>
     <body>
 <dl>
 <dt>
 <a href=''http://link100.htmt_AA''> photograph of AA </a>.
 </dt>
 <dt>
                <a href="http://link100.htmt_BB"> photograph
 of BB </a>
 ......
 ......
 </dl>
 </body>
 </html>
 
 [link100.html]
 <html xm1ns="http://www.w3.org/1999/xhtml" xm1:lang="ja"
 lang="ja">
     <head>
          <title> portraits of members </title>
     </head>
     <body>
          <dl>
                <dt>
                     <a name="AA"><img src="./AA.gif"/></a>
                </dt>
                <dt>
                     <a name="BB"><img src="./BB.gif"/></a>
                </dt>
 ......
 ......
          </dl>
     </body>
 </html>
     ZDL describing the following operation/behavior is
 applied to HTML describing such a structure as above.
     [Zooming description of content]
 <template name="Overview" match="/html/body/dl"
 initZoomFactor="0.0">
     <propagation destination="Member" select="dt"
 relation="1.0"/>
 </template>
 
 <template name="Member" match="/html/body/dl/dt"
 initZoomFactor="0.0">
     <text select="a">
           <dispText zoomFactor="0.0" fontSize="12pt"/>
           <dispText zoomFactor="1.0" fontSize="12pt"/>
      </text>
      <propagation destination="MemberImage" select="a"
 relation="1.0"/>
 </template>
 
 <template name="MemberImage" match="/html/body/dl/dt/a"
 initZoomFactor="0.0">
      <img select="img">
           <dispImg zoomFactor="0.0" imgSize="0%"/>
           <dispImg zoomFactor="1.0" imgSize="100%"/>
     </text>
 </template>
```

According to the ZDL description, there are two kinds of zoom targets ("Overview" and "Member") in the content A of the link source; the former corresponds to overall zooming and the latter corresponds to zooming of individual items. The former zooming operation is propagated to the latter (<propagation destination="Member" ····· />. The latter zooming operation is further propagated to content ("Member Image") of the link destination designated by <a href= ···· /> (<propagation destination="MemberImage" select="a"). It is to be noted that the "href" attribute in the <a/> tag of a corresponding HTML refers to a specific portion of an HTML file in the content B of the link destination as href=''http://link100.html_AA''.

The zooming operation/behavior of the content B of the link destination is described by <template name="MemberImage ····· />. Incidentally, it is assumed that, in the structure description (link100.html) of the content B of the link destination, all individual portions described in a format of <a name="AA"> have the same structure, and they are different only in still image file (portrait). Therefore, one template for zooming operation/behavior description can be commonly applied to these portions. When the zoom factor of "MemberImage" is 0.0, a still image is displayed in 0% of its original size (that is, nothing is displayed). When the zoom factor reaches 1.0 according to enlargement from 0.0, the still image is displayed in the original size.

Transition of zooming behavior based on these descriptions is shown in Figs 19 to 21.

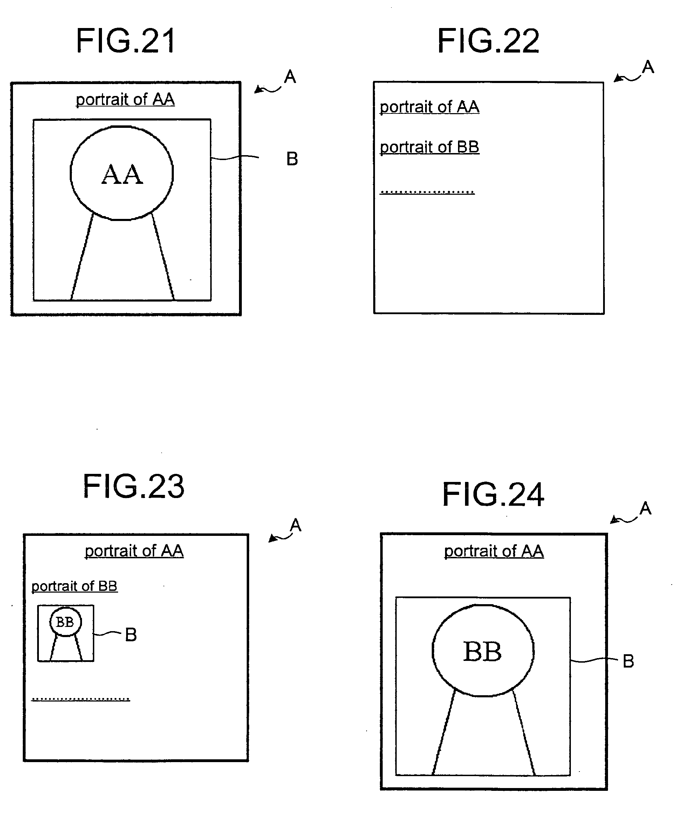

An initial zoom factor is 0.0 in all of "Overview", "Member", and "MemberImage", and, in an initial state of display, only anchor text, "portrait of AA" and "portrait of BB", is displayed in 12 points (see Fig. 19). When "Member" corresponding to "portrait of AA" is zoomed in from the state shown in Fig. 19, because a zoom propagation factor between "Member" and "MemberImage" is 1.0 (relation="1.0"), zoom factors thereof change at the same change rate. When "Member" is zoomed in, the zoom propagation to "MemberImage" corresponding to <a name="AA"> of [link100.html] occurs. Specifically, AA.gif is displayed and a size thereof is gradually increased (see Fig. 20). When the zoom factors of "Member" and "MemberImage" reach 1.0 according to further zooming-in, AA.gif is displayed in its original size (see Fig. 21). In the zooming operation, a font size of "portrait of AA" is remains unchanged at 12 points.

By describing, in the structure description, such zooming operation/behavior as to cause the zoom propagation from a zoom target corresponding to a propagation source of a hyperlink to a zoom target corresponding to the content B of the link destination, a portion of the content B of the link destination can be displayed together with the content A of the link source on the same screen. The display state of the portion can be changed according to zooming operation performed by a user.

### Fourth Example

Next, another example is explained in which, when zooming operation is propagated from the content A of the link source to the specific portion of the content B of the link destination, the size of anchor text of the content B gradually decreases. The HTML file is basically similar to that explained in the first example except that a portion of ZDL changes as follows:

```
 <template name="Member" match="/html/body/dl/dt"
 initZoomFactor="0.0">
     <text select="a">
          <dispText zoomFactor="0.0" fontSize="12pt"/>
          <dispText zoomFactor="1.0" fontSize="0pt"/>
     </text>
     <propagation destination="MemberImage" select="a"
 relation="1.0"/>
 </template>
```

That is, the size of anchor text included in "Member" gradually decreases as a zoom factor increases, and it disappears at a zoom factor of 1.0.

Transition of zooming behavior based on these descriptions is shown in Figs. 22 to 24.

According to the ZDL description, an initial zoom factor is 0.0 in all of "Overview", "Member", and "MemberImage", and, in an initial state of display, only anchor text, "portrait of AA" and "portrait of BB", is displayed in 12 points as in the first example (see Fig. 22). When "Member" corresponding to text "portrait of BB" is zoomed in from the state shown in Fig. 22, the zoom propagation to "MemberImage" corresponding to <a name="BB"> of [link100.html] occurs (the zoom propagation factor is 1.0). Specifically, BB.gif is displayed, and as the size of BB.gif increases, the size of text "portrait of BB" decreases (see Fig. 23). When the zoom factors of "Member" and "MemberImage" reach 1.0 according to further zooming-in, BB.gif is displayed in its original size, and text "portrait of BB" disappears (see Fig. 24).

Thus, with the ZDL description, zooming operation can be propagated to all or part of content of a link destination of a hyperlink.

As described above, according to the first embodiment, content described by a structure description language regarding a display format of content such as existing HTML is displayed on a versatile Web browser, and zooming operation can be realized. The same effect can be achieved in the case of XML where data regarding a structure of content and data regarding a display format thereof are separated from each other. In XML, an XML document as data and an extensible stylesheet language (XSL) that sets a style of the XML document, arranges a screen or a format for printing, or sets a style that is a specification for setting up type are separated from each other. XSL that constitutes such XML is also a structure description language regarding a display form of content.

The first embodiment, text and a still image are cited as examples of media objects; however, zooming operation can be propagated to other media objects at an HTML link destination, such as moving image, and audio, described by a zooming description language.

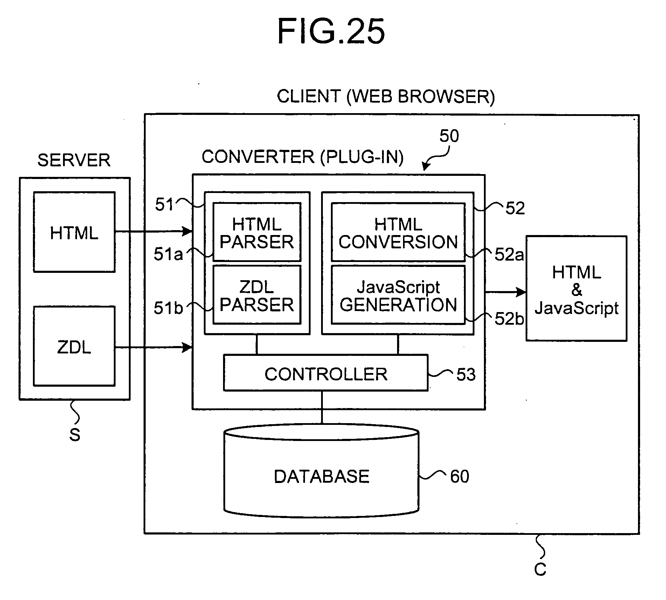

Next, a second embodiment of the present invention is explained with reference to Fig. 25. The same reference characters are utilized in designating corresponding portions, and the same explanations are not repeated.

In the first embodiment, the converter 50 that is the content converting device provided on the server S side reads HTML describing the structure and ZDL describing the operation/behavior, and converts them to a set of an HTML file and JavaScript (registered trademark) codes. Thus, a user on the client C side can perform browsing and zooming operation through a versatile Web browser. On the other hand, in the second embodiment, the converter 50 is provided to a browser on the client C side differently from the first embodiment.

Fig. 25 is a schematic diagram for explaining a process of combining ZDL and HTML according to the second embodiment. As shown in Fig. 25, when the converter 50 is provided to a browser on the client C side, descriptions of HTML that is a structure description regarding a display format of content including various objects to be zoomed and ZDL that is a zooming description as to zooming operation/behavior for each of the objects are transmitted from the server S to the client C as they are. The client C (receiving unit) receives the descriptions of HTML and ZDL. However, versatile browsers currently in use cannot interpret ZDL. Therefore, in the second embodiment, the browser is required to read plugin to realize the same function as the converter 50. The function of the converter 50 and the database 60 are the same as described previously in the first embodiment.

In the future, when the function of the converter 50 is incorporated into a versatile browser in advance, the browser need not read plugin separately.

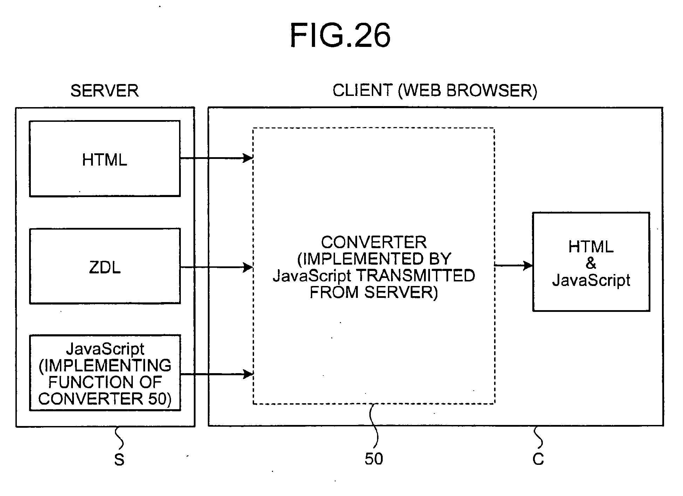

Next, a third embodiment of the present invention is explained with reference to Fig. 26. The same reference characters are utilized in designating corresponding portions, and the same explanations are not repeated.

In the first embodiment, the converter 50 that is the content converting device provided on the server S side reads HTML describing structure and ZDL describing operation/behavior to convert them to a set of an HTML file and JavaScript (registered trademark) codes, so that the client C can perform browsing and zooming operation through a versatile Web browser. In the second embodiment, the converter 50 is provided to a browser on the client C side. In the third embodiment, JavaScript (registered trademark) codes realizing the same function as the converter 50 is prepared on the server S side and transmitted to the browser of the client C for execution. With this, ZDL is interpreted, and HTML and ZDL are converted to a set of an HTML file and JavaScript (registered trademark) codes differently from the first embodiment and the second embodiment.

Fig. 26 is a schematic diagram for explaining a process of combining ZDL and HTML according to the third embodiment. As shown in Fig. 26, JavaScript (registered trademark) codes realizing the same function as the converter 50 is prepared on the server C side and transmitted to the browser of the client C to be executed so that ZDL is interpreted and HTML and ZDL are converted to a set of an HTML file and JavaScript (registered trademark) codes. Accordingly, ZDL can be interpreted by a versatile browser without reading plugin differently from the second embodiment.

As described above, according to the second and third embodiments, it is not necessarily required to transmit HTML, ZDL, and JavaScript (registered trademark) codes from one server S to the client C side. For example, in the second embodiment, HTML and ZDL are respectively transmitted from different servers S to the client C. In the third embodiment, ZDL and JavaScript (registered trademark) can be transmitted from the same server S and HTML can be transmitted from another server C.

As set forth hereinabove, according to an embodiment of the present invention, content described in the format of a markup language such as existing XML and HTML can be zoomed in while being displayed on a general Web browser.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A content converting device comprising:
a structure description parser (51a) that parses a structure description related to a display format of content including objects to be zoomed;
a zooming description parser (51b) that parses a zooming description that describes zooming operation and behavior for each of the objects;
a converting unit (52a) that converts the structure description to a content file based on a parsing result obtained by the structure description parser (51a); and
a generating unit (52b) that generates script language codes based on a parsing result obtained by the zooming description parser (51b).

2. The content converting device according to claim 1, wherein, the converting unit (52a) refers to predefined rules to convert the structure description to the content file.

3. The content converting device according to either claim 1 or claim 2, wherein, the generating unit (52b) refers to predefined rules to generate the script language codes.

4. The content converting device according to claim 3, wherein the predefined rules include part of the script language codes that is highly versatile and commonly used.

5. A content display device that generates content based on a structure description related to a display format of content including objects to be zoomed and a zooming description describing zooming operation and behavior for each of the objects to display the content, the content display device comprising:
a structure description parser (51a) that parses the structure description;
a zooming description parser (51b) that parses the zooming description;
a converting unit (52a) that converts the structure description to a content file based on a parsing result obtained by the structure description parser (51a);
a generating unit (52b) that generates script language codes based on a parsing result obtained by the zooming description parser (51b) ; and
an output unit that outputs the content file and the script language codes.

6. A content browsing device comprising:
a receiving unit that receives input of a structure description related to a display format of content including objects to be zoomed and a zooming description that describes zooming operation and behavior for each of the objects;
a structure description parser (51a) that parses the structure description;
a zooming description parser (51b) that parses the zooming description;
a converting unit (52a) that converts the structure description to a content file based on a parsing result obtained by the structure description parser (51a);
a generating unit (52b) that generates script language codes based on a parsing result obtained by the zooming description parser (51b);
an output unit that outputs the content file and the script language codes; and
a display controlling unit that interprets the content file and the script language codes to display the content, and changes a display state of the content in response to a command from a user.

7. A content converting method comprising:
first parsing a structure description related to a display format of content including objects to be zoomed;
second parsing a zooming description that describes zooming operation and behavior for each of the objects;
converting the structure description to a content file based on a parsing result obtained at the first parsing; and
generating script language codes based on a parsing result obtained at the second parsing.

8. The content converting method according to claim 7, wherein, the converting includes referring to rules predefined for code conversion.

9. The content converting method according to either claim 7 or claim 8, wherein, the generating includes referring to rules predefined for code generation.

10. The content converting method according to claim 9, wherein the predefined rules include part of the script language codes that is highly versatile and commonly used.

11. A content browsing method that is applied to a client-server environment including a server that includes the content converting device according to any one of claims 1 to 4 and a client that includes a browser, the content browsing method comprising:
the server transmitting the content file and the script language codes to the client;
the client interpreting the content file and the script language codes received from the server to display the content by the browser; and
the client changing a display state of the content in response to a command from a user.

12. A content browsing method that is applied to a client-server environment including at least one server and a client that includes the content converting device according to any one of claims 1 to 4 on a browser, the content browsing method comprising:
the server transmitting the structure description and the zooming description to the client;
the client converting the structure description and the zooming description to the content file and the script language codes;
the client interpreting the content file and the script language codes to display the content by the browser; and
the client changing a display state of the content in response to a command from a user.

13. A content browsing method that is applied to a client-server environment including at least one server and a client that includes a browser, the content browsing method comprising:
the server transmitting the structure description, the zooming description, and second script language codes that, when executed, implement the content converting device according to any one of claims 1 to 4 to the client; and
the client executing the second script language codes to implement the content converting device on the browser;
the client converting the structure description and the zooming description to the content file and the script language codes;
the client interpreting the content file and the script language codes to display the content by the browser; and
the client changing a display state of the content in response to a command from a user.

14. A computer program comprising program code means that, when executed on a computer system, instructs a computer system to carry out the steps according to any one of claims 7 to 13.

15. A computer readable storage medium having recorded thereon program code means that, when executed on a computer system, instructs a computer system to carry out the steps according to any one of claims 7 to 13.
